(19) **Europäisches Patentamt / European Patent Office / Office européen des brevets**

(11) **EP 4 679 081 A1**

(12) **EUROPEAN PATENT APPLICATION**
published in accordance with Art. 153(4) EPC

(43) Date of publication:
**14.01.2026 Bulletin 2026/03**

(21) Application number: **23926382.5**

(22) Date of filing: **02.08.2023**

(51) International Patent Classification (IPC):
*G01N 29/32* (2006.01)    *G01N 29/04* (2006.01)
*G01N 29/27* (2006.01)

(52) Cooperative Patent Classification (CPC):
**G01N 29/27; G01N 29/04; G01N 29/043;**
**G01N 29/07; G01N 29/11; G01N 29/225;**
**G01N 29/32;** G01N 2291/011; G01N 2291/106

(86) International application number:
**PCT/JP2023/028236**

(87) International publication number:
**WO 2024/185173 (12.09.2024 Gazette 2024/37)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **08.03.2023 JP 2023035817**

(71) Applicant: **Kabushiki Kaisha Toshiba**
**Tokyo 105-0023 (JP)**

(72) Inventors:
• **NAKAI, Yutaka**
  **Tokyo 105-0023 (JP)**
• **ONO, Tomio**
  **Tokyo 105-0023 (JP)**
• **YAMAMOTO, Noriko**
  **Tokyo 105-0023 (JP)**

(74) Representative: **Marks & Clerk LLP**
**15 Fetter Lane**
**London EC4A 1BW (GB)**

(54) **INSPECTION DEVICE AND INSPECTION METHOD**

(57) An inspection device and an inspection method capable of improving detection accuracy are provided. According to one embodiment, an inspection device includes an element section and a transport section. The element section includes first and second transmitting elements, and first and second receiving elements. The element section includes a first transmitting element capable of transmitting a first ultrasonic wave including a plurality of first burst waves having a first period $Tp$, a second transmitting element capable of transmitting a second ultrasonic wave including a plurality of second burst waves having the first period $Tp$, a first receiving element into which the first ultrasonic wave is incident, and a second receiving element into which the second ultrasonic wave is incident. A first distance $L1$ (m) between the first receiving element and the second receiving element, a first time difference $\Delta t1$ (s) between one of the plurality of first signals and one of the plurality of second signals, a propagation velocity $vx$ (m/s) of the first and second ultrasonic waves in a space, the first period $Tp$ (s), and the first time width $Tw$ (s) satisfy $n \times Tp + Tw/4 < \Delta t1 + L1/vx < (n + 1) \times Tp - Tw/4$.

EP 4 679 081 A1

FIG. 1A

FIG. 1B

**Description**

[Technical Field]

Embodiments of the invention relate to an inspection device and an inspection method.

[Background Art]

For example, there is an inspection device using ultrasonic waves. Improvement in detection accuracy is desired.

[Prior Art Documents]

[Patent Literature]

[Patent Literature 1] JP2022-42612A

[Summary of Invention]

[Problem to be Solved by the Invention]

Embodiments of the invention provide an inspection device and an inspection method capable of improving detection accuracy.

[Means for Solving the Problem]

According to one embodiment, an inspection device includes an element section and a transport section. The element section includes a first transmitting element, a second transmitting element, a first receiving element and a second receiving element. The first transmitting element is configured to transmit a first ultrasonic wave. The first ultrasonic wave includes a plurality of first burst waves having a first period Tp. The second transmitting element is configured to transmit a second ultrasonic wave. The second ultrasonic wave includes a plurality of second burst waves having the first period Tp. The first ultrasonic wave is incident on the first receiving element. The second ultrasonic wave is incident on the second receiving element. The transport section is configured to transport an inspection target along a first direction in a space between the first transmitting element and the first receiving element and between the second transmitting element and the second receiving element. A second direction from the first transmitting element to the first receiving element crosses the first direction. The first receiving element is configured to output a first receive signal corresponding to the first ultrasonic wave. The second receiving element is configured to output a second receive signal corresponding to the second ultrasonic wave. The first receive signal includes a plurality of first signals respectively corresponding to the plurality of first burst waves. One of the plurality of first signals has a first time width Tw. The second receive signal includes a plurality of second signals respectively corresponding to the plurality of second burst waves. One of the plurality of second signals has the first time width Tw. A first distance L1 (m) between the first receiving element and the second receiving element, a first time difference $\Delta t1$ (s) between one of the plurality of first signals and one of the plurality of second signals, a propagation velocity vx (m/s) of the first ultrasonic wave and the second ultrasonic wave in the space, the first period Tp (s), and the first time width Tw (s) satisfy $n \times Tp + Tw/4 < \Delta t1 + L1/vx < (n + 1) \times Tp - Tw/4$. The n being an integer of 0 or more.

[Brief Description of Drawings]

[FIG. 1] FIGS. 1A and 1B are schematic plan views illustrating an inspection device according to a first embodiment.
[FIG. 2] FIG. 2 is a schematic side view illustrating the inspection device according to the first embodiment.
[FIG. 3] FIGS. 3A and 3B are schematic diagrams illustrating the inspection device according to the first embodiment.
[FIG. 4] FIGS. 4A and 4B are schematic diagrams illustrating the inspection device according to the first embodiment.
[FIG. 5] FIGS. 5A and 5B are schematic diagrams illustrating the inspection device according to the first embodiment.
[FIG. 6] FIGS. 6A and 6B are schematic plan views illustrating an inspection device according to the first embodiment.
[FIG. 7] FIGS. 7A and 7B are schematic diagrams illustrating the inspection device according to the first embodiment.
[FIG. 8] FIGS. 8A and 8B are schematic diagrams illustrating the inspection device according to the first embodiment.
[FIG. 9] FIGS. 9A and 9B are schematic plan views illustrating an inspection device according to the first embodiment.
[FIG. 10] FIGS. 10A and 10B are schematic plan views illustrating an operation of an inspection device according to the first embodiment.
[FIG. 11] FIGS. 11A and 11B are schematic diagrams illustrating the operation of the inspection device according to the first embodiment.
[FIG. 12] FIGS. 12A and 12B are schematic sectional views illustrating a part of an inspection device according to the first embodiment.
[FIG. 13] FIGS. 13A and 13B are schematic plan views illustrating an inspection device according to a second embodiment.
[FIG. 14] FIGS. 14A and 14B are schematic plan views illustrating the inspection device according to the second embodiment.
[FIG. 15] FIG. 15 is a flowchart illustrating an inspection method according to a third embodiment.

[Description of Embodiments]

Various embodiments are described below with reference to the accompanying drawings.
The drawings are schematic and conceptual; and the relationships between the thickness and width of portions, the proportions of sizes among portions, etc., are not necessarily the same as the actual values. The dimensions and proportions may be illustrated differently among drawings, even for identical portions.
In the specification and drawings, components similar to those described previously in an antecedent drawing are marked with like reference numerals, and a detailed description is omitted as appropriate.

First Embodiment

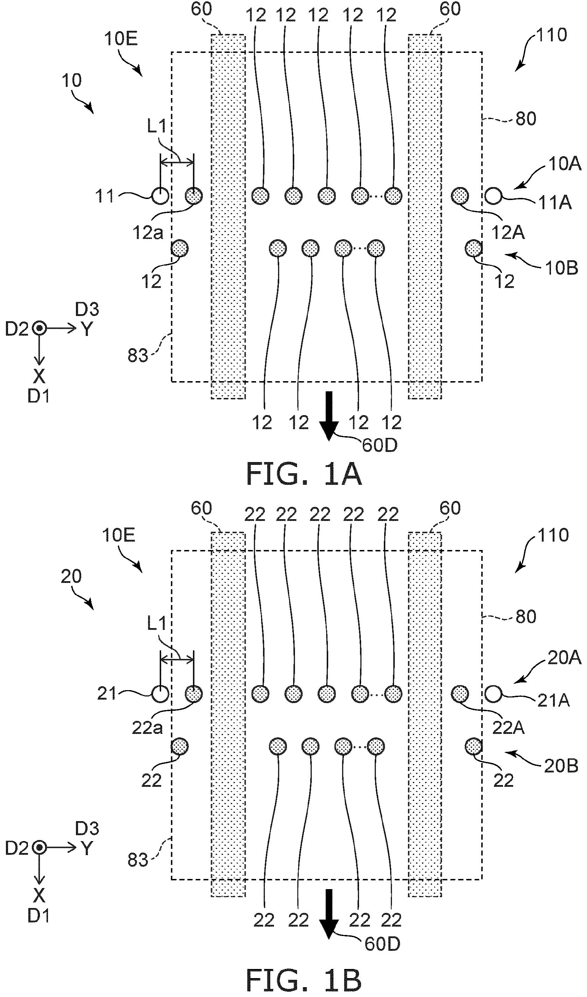

FIGS. 1A and 1B are schematic plan views illustrating an inspection device according to a first embodiment.

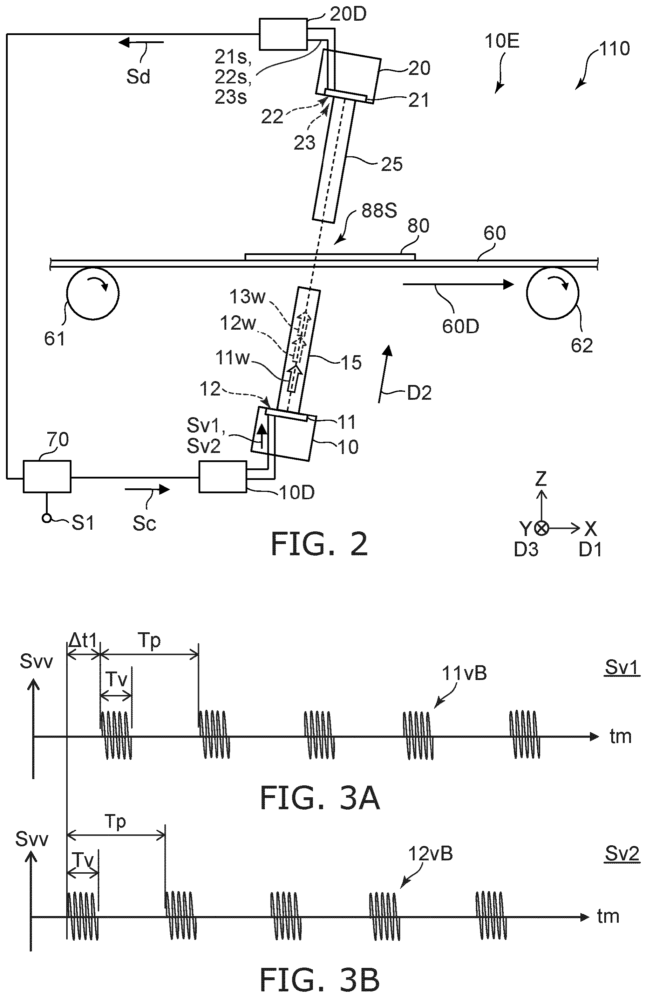

FIG. 2 is a schematic side view illustrating the inspection device according to the first embodiment.
FIGS. 3A, 3B, 4A, 4B, 5A and 5B are schematic diagrams illustrating the inspection device according to the first embodiment.
As shown in FIGS. 1A, 1B, and 2, an inspection device 110 according to the embodiment includes an element section 10E and a transport section 60. The inspection device 110 may include a controller 70.
As shown in FIGS. 1A and 1B, the element section 10E includes a first transmitting element 11, a second transmitting element 12, a first receiving element 21 and a second receiving element 22.
The first transmitting element 11 is configured to transmit a first ultrasonic wave 11w. The second transmitting element 12 is configured to transmit a second ultrasonic wave 12w.
These ultrasonic waves are based on drive signals supplied to the transmitting elements. As shown in FIG. 2, a transmitting circuit 10D is connected to the first transmitting element 11 and the second transmitting element 12, for example. A control signal Sc from the controller 70 controls the transmitting circuit 10D. A first drive signal Sv1 from the transmitting circuit 10D is supplied to the first transmitting element 11. A second drive signal Sv2 from the transmitting circuit 10D is supplied to the second transmitting element 12. The first ultrasonic wave 11w is emitted from the first transmitting element 11 based on the first drive signal Sv1. The second ultrasonic wave 12w is emitted from the second transmitting element 12 based on the second drive signal Sv2.
FIG. 3A illustrates the first drive signal Sv1. FIG. 3B illustrates the second drive signal Sv2. The horizontal axis of FIGS. 3A and 3B is time tm. The vertical axis is the voltage Svv of the drive signal. As shown in FIG. 3A, the first drive signal Sv1 includes a plurality of first burst signals 11vB. The plurality of first burst signals 11vB have a first period Tp. One of the plurality of first burst signals 11vB has a time width Tv. As shown in FIG. 3B, the second drive signal Sv2 includes a plurality of second burst signals 12vB. The plurality of second burst signals 12vB have a first period Tp. One of the plurality of second burst signals 12vB has the time width Tv. The plurality of second burst signals 12vB are shifted by a first time difference $\Delta t1$ with respect to the plurality of first burst waves 11wB.
For example, by deformation of a piezoelectric layer or the like included in the transmitting element by the drive signal, ultrasonic waves (such as the first ultrasonic wave 11w and the second ultrasonic wave 12w) are emitted.

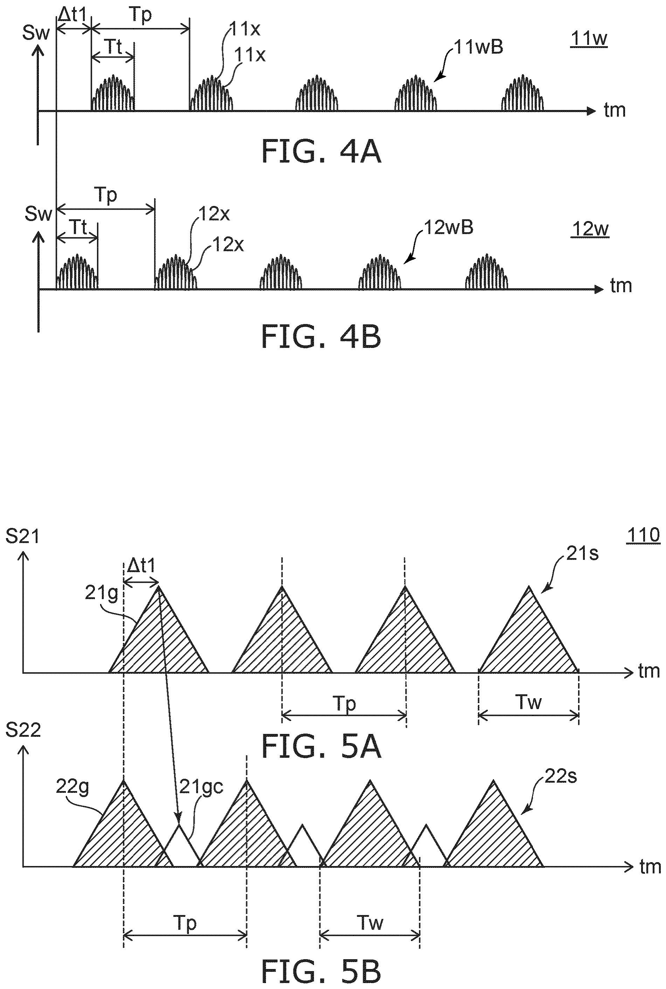

FIGS. 4A and 4B illustrate these ultrasonic waves. The horizontal axis of FIGS. 4A and 4B is time tm. The vertical axis is the intensity Sw of the ultrasonic waves. FIG. 4A illustrates the first ultrasonic wave 11w. FIG. 4B illustrates the second ultrasonic wave 12w. As shown in FIG. 4A, the first ultrasonic wave 11w emitted from the first transmitting element 11 includes a plurality of first burst waves 11wB. The plurality of first burst waves 11wB have the first period Tp. One of the plurality of first burst waves 11wB has a time width Tt. One of the plurality of first burst waves 11wB includes a plurality of first waves 11x.
As illustrated in FIG. 4B, the second ultrasonic wave 12w transmitted from the second transmitting element 12 includes a plurality of second burst waves 12wB. The plurality of second burst waves 12wB have the first period Tp. One of the plurality of second burst waves 12wB has the time width Tt. One of the plurality of second burst waves 12wB includes a plurality of second waves 12x.

One of the plurality of first burst waves 11wB and one of the plurality of second burst waves 12wB have the first time difference $\Delta t1$. The time width Tt of the ultrasonic wave may be longer than the time width Tv of the drive signal. For example, the time width Tt is likely to be longer than the time width Tv of the driving signal due to transient operation characteristics of the transmitting element.

As shown in FIG. 2, the first receiving element 21 faces the first transmitting element 11. The second receiving element 22 faces the second transmitting element 12. The first ultrasonic wave 11w is incident on the first receiving element 21. The second ultrasonic wave 12w is incident on the second receiving element 22.

As shown in FIGS. 1A, 1B and 2, a space 88S is provided between the first transmitting element 11 and the first receiving element 21 and between the second transmitting element 12 and the second receiving element 22. The transport section 60 is configured to transport an inspection target 80 in the space 88S along a first direction D1 (transporting direction 60D).

The first direction D1 is defined as an X-axis direction. One direction perpendicular to the X-axis direction is defined as a Y-axis direction. A direction perpendicular to the X-axis direction and the Y-axis direction is defined as a Z-axis direction.

As shown in FIG. 2, a second direction D2 from the first transmitting element 11 to the first receiving element 21 crosses the first direction D1. In this example, the second direction D2 is inclined with respect to the first direction D1. The second direction D2 may be perpendicular to the first direction D1.

As shown in FIG. 2, the first transmitting element 11 and the second transmitting element 12 are included in a transmitting section 10. The first receiving element 21 and the second receiving element 22 are included in a receiving section 20.

The ultrasonic waves emitted from the first transmitting element 11 and the second transmitting element 12 pass through the inspection target 80 and reach the receiving section 20. The ultrasonic waves are converted into electrical signals by the piezoelectric layers and the like included in the first receiving element 21 and the second receiving element 22 included in the receiving section 20. For example, the first receiving element 21 is configured to output a first receive signal 21s (see FIG. 2) corresponding to the first ultrasonic wave 11w being incident. The second receiving element 22 is configured to output a second receive signal 22s (see FIG. 2) corresponding to the second ultrasonic wave 12w being incident.

FIG. 5A schematically illustrates the first receive signal 21s output from the first receiving element 21. FIG. 5B schematically illustrates the second receive signal 22s output from the second receiving element 22. The horizontal axis of these figures is time tm. The vertical axis of FIG. 5A is the magnitude S21 (for example, voltage) of the first receive signal 21s. The vertical axis of FIG. 5B is the magnitude S22 (for example, voltage) of the second receive signal 22s.

As shown in FIG. 5A, the first receive signal 21s includes a plurality of first signals 21g. The plurality of first signals 21g respectively correspond to the plurality of first burst waves 11wB. For example, one of the plurality of first signals 21g corresponds to one of the plurality of first burst waves 11wB.

As shown in FIG. 5B, the second receive signal 22s includes a plurality of second signals 22g. The plurality of second signals 22g respectively correspond to the plurality of second burst waves 12wB. For example, one of the plurality of second signals 22g corresponds to one of the plurality of second burst waves 12wB.

As shown in FIGS. 5A and 5B, one of the plurality of first signals 21g and one of the plurality of second signals 22g have the first time difference $\Delta t1$. The first time difference $\Delta t1$ in the received signal reflects the first time difference $\Delta t1$ in the transmitted ultrasound.

A period of the plurality of first signals 21g is the first period Tp. A period of the plurality of second signals 22g is the first period Tp. The period (first period Tp) in the received signal reflects the first period Tp in the transmitted ultrasonic waves.

As shown in FIG. 5A, one of the plurality of first signals 21g has a first time width Tw. As shown in FIG. 5B, one of the plurality of second signals 22g has the first time width Tw. The first time width Tw in the received signal may be the same as or different from the time width Tt in the transmitted ultrasound. For example, due to transient operating characteristics of the receiving element, the first time width Tw may be longer than the time width Tt of the ultrasonic wave incident on the receiving element.

The electrical signals (first receive signal 21s and second receive signal 22s) obtained from the first receiving element 21 and the second receiving element 22 are supplied to a detection circuit 20D. For example, a detection signal Sd obtained from the detection circuit 20D is supplied to the controller 70. The controller 70 outputs a detection result S1 based on the detection signal Sd. The detection result S1 includes the state of the inspection target 80.

The inspection target 80 is, for example, a bill. The inspection target 80 may be a paper such as a security. The material of the inspection target 80 is arbitrary.

As shown in FIG. 2, the transport section 60 may include a first transport mechanism 61, a second transport mechanism 62, and the like. These transport mechanisms may be, for example, rollers. The transport mechanism may be, for example, a transport belt.

As shown in FIG. 2, the transmitting section 10 includes a transmitting waveguide 15 in this example. The transmitting waveguide 15 guides the ultrasonic wave emitted from the transmitting element. In this example, the receiving section 20 includes a receiving waveguide 25. The receiving waveguide 25 guides the ultrasonic wave after passing through the inspection target 80. The ultrasonic waves emitted from the receiving waveguide 25 are incident on the receiving element. For example, influences such as multiple reflection are suppressed. Noise is suppressed, and highly accurate inspection becomes possible.

FIG. 1A illustrates the transmitting section 10. FIG. 1B illustrates the receiving section 20. As shown in FIG. 1A, a plurality of transmitting elements including the first transmitting element 11 and the second transmitting element 12 are provided. As shown in FIG. 1B, a plurality of receiving elements including the first receiving element 21 and the second receiving element 22 are provided. As shown in FIGS. 1A and 1B, the first receiving element 21 substantially overlaps the first transmitting element 11 in the second direction D2 (see FIG. 2). As shown in FIGS. 1A and 1B, the second receiving element 22 substantially overlaps the second transmitting element 12 in the second direction D2 (see FIG. 2). Thus, the plurality of receiving elements overlap the plurality transmitting elements in the second direction D2. In the following description, the positions of the receiving elements in the X-Y plane substantially correspond to the positions of the transmitting elements in the X-Y plane.

As shown in FIGS. 1A and 1B, a direction crossing the first direction D1 (transporting direction) is defined as a third direction D3. The third direction D3 crosses a plane including the first direction D1 and the second direction D2. The third direction D3 is, for example, the Y-axis direction.

As shown in FIG. 1A, a plurality of second transmitting elements 12 described above may be provided. As shown in FIG. 1A, in this example, another first transmitting element 11A is provided in addition to the first transmitting element 11. In the following, at first, the first transmitting element 11 is noticed. An element 12a which is one of a plurality of second transmitting elements 12 is noticed. The first receiving element 21 corresponding to the first transmitting element 11 is noticed. An element 22a (receiving element) corresponding to the element 12a is noticed.

A distance between the first receiving element 21 and the second receiving element 22 (element 22a) is defined as a first distance L1. A distance between the first transmitting element 11 and the second transmitting element 12 (element 12a) may be the first distance L1.

A propagation velocity of the first ultrasonic wave 11w and the second ultrasonic wave 12w in the space 88S is defined as a propagation velocity vx. In the embodiment, the first distance L1 (m), the first time difference $\Delta$t1 (s), the propagation velocity vx (m/s), the first period Tp (s), and the first time width Tw (s) satisfy following first formula:

$$n \times Tp + Tw/4 < \Delta t1 + L1/vx < (n + 1) \times Tp - Tw/4 \ldots (1).$$

"$n$" is an integer greater than or equal to 0. When this relationship is satisfied, for example, crosstalk can be suppressed.

As shown in FIG. 5B, the plurality of second signals 22g are generated in the second receiving element 22 (element 22a) as described above. The plurality of second signals 22g correspond to the plurality of second burst waves 12wB of the second ultrasonic wave 12w being incident. As shown in FIG. 5B, a signal 21gc is generated in the second receiving element 22 (element 22a). The signal 21gc corresponds, for example, to the part of the first ultrasonic wave 11w. For example, when the part of the first ultrasonic wave 11w is incident on the element 22a, the signal 21gc is generated. The signal 21gc is likely to occur, for example, due to the influence of an end portion 83 in the third direction D3 of the inspection target 80. For example, the part of the first ultrasonic wave 11w passes through the end portion 83 and enters the second receiving element 22. When such a component overlaps the plurality of second signals 22g in time, the component (signal 21gc) becomes noise. For example, crosstalk occurs.

In the embodiments, the first formula is satisfied. As a result, the temporal position of the unnecessary component (signal 21gc) becomes between the plurality of second signals 22g. Thereby, noise is suppressed. Crosstalk can be suppressed. It is possible to provide an inspection device capable of improving detection accuracy.

For example, the first distance L1 is set so as to satisfy the first formula described above. For example, the first time difference $\Delta$t1 is set so as to satisfy the first formula. As shown in the first formula, for example, the range of suitable values for the first distance L1 is discrete. A suitable range of values for the first time difference $\Delta$t1 is discrete.

For example, a first reference example in which ultrasonic waves are transmitted from all transmitting elements at the same timing is conceivable. In the first reference example, if the distance (first distance L1) between the two receiving elements (or transmitting elements) is not set appropriately, a component (signal 21gc) based on the first ultrasonic wave 11w overlaps the second signal 22g in the element 22a. The component (signal 21gc) becomes noise. Crosstalk occurs, and inspection with high accuracy is difficult. For example, false detection due to noise is likely to occur at the end portion 83 of the inspection target 80 in the third direction D3.

In the embodiments, according to the first formula, the component (signal 21gc) is positioned between the plurality of second signals 22g. Noise is suppressed and crosstalk is suppressed. For example, the abnormality relating to the end portion 83 in the third direction D3 of the inspection target 80 can be inspected with high accuracy.

As described above, the relationship of the first formula is defined by the first time width Tw of the received signal.

Thereby, crosstalk can be effectively suppressed in the received signal including the transient operation characteristic of the receiving element.

In the embodiment, the intensities of the ultrasonic waves transmitted from the first transmitting element 11 and the second transmitting element 12 may be the same or different from each other. For example, when the signal intensity of the first transmitting element 11 is reduced, the component received by the second receiving element 22 from the first transmitting element 11 becomes smaller. The influence on the second signal 22g is reduced, and noise is suppressed. Crosstalk can be suppressed. For example, when the signal intensity corresponding to the component from the first transmitting element 11 becomes 1/2 or less of the signal intensity of the second signal 22g, the crosstalk is effectively suppressed.

In the embodiment, "$n$" is preferably 0 or 1. When $n$ is 2 or more, for example, the first distance L1 is excessively long. For example, resolution decreases. For example, the device becomes large. By "$n$" being 0 or 1, high resolution is obtained. Miniaturization becomes easier.

The first distance L1 may be a length along the inter-element direction between the center of the first receiving element 21 in the inter-element direction from the first receiving element 21 to the second receiving element 22 (element 22a) and the center of the second receiving element 22 (element 22a) in the inter-element direction. In the example of FIG. 1B, the inter-element direction is the third direction D3 (for example, the Y-axis direction).

The first distance L1 may be a length along the inter-element direction between the center of the first transmitting element 11 in the inter-element direction from the first transmitting element 11 to the second transmitting element 12 (element 12a) and the center of the second transmitting element (element 12a) in the inter-element direction. In the example of FIG. 1A, the inter-element direction is the third direction D3 (for example, the Y-axis direction).

In the embodiments, the first distance L1 is, for example, not less than 10 mm and not more than to 30 mm. High resolution and a practical device size can be obtained. In the embodiment, the first period Tp is, for example, not less than 200 μs and not more than 1000 μs. For example, the first time width Tw is not less than 200 μs and not more than to 1000 μs. High-speed inspection can be performed.

In this example, the third direction D3 from the first receiving element 21 to the second receiving element 22 (element 22a) crosses a plane including the first direction D1 and the second direction D2. As will be described below, the direction from the first receiving element 21 to the second receiving element 22 may substantially along the first direction D1. In this example, the third direction D3 from the first transmitting element 11 to the second transmitting element 12 (element 12a) crosses a plane including the first direction D1 and the second direction D2. As will be described below, the direction from the first transmitting element 11 to the second transmitting element 12 may substantially along the first direction D1.

As shown in FIGS. 1A and 1B, in this example, the element section 10E includes the plurality of second transmitting elements 12 and the plurality of second receiving elements 22. The positions of the plurality of second receiving elements 22 correspond to the plurality of second transmitting elements 12, respectively.

One of the plurality of second receiving elements 22 (element 22a) is closest to the first receiving element 21 among the plurality of second receiving elements 22. In this case, the first distance L1 is a distance between the first receiving element 21 and one of the plurality of second receiving elements 22 (element 22a). The second ultrasonic wave 12w transmitted from one of the plurality of second transmitting elements 12 (element 12a) enters one (element 22a) of the plurality of second receiving elements 22.

One of the plurality of second transmitting elements 12 (element 12a) is closest to the first transmitting element 11 among the plurality of second transmitting elements 12. In this case, the first distance L1 is a distance between the first transmitting element 11 and one of the plurality of second transmitting elements 12 (element 12a).

The first formula is satisfied with respect to the second receiving element 22 (element 22a) closest to the first receiving element 21 among the plurality of second receiving elements 22. For example, the first formula is satisfied with respect to the second transmitting element 12 (element 12a) closest to the first transmitting element 11 among the plurality of second transmitting elements 12.

As shown in FIG. 1B, the element section 10E includes a first row 20A. The first row 20A includes the first receiving element 21 and the plurality of second receiving elements 22. The plurality of second receiving elements 22 are arranged along the third direction D3. The third direction D3 crosses a plane including the first direction D1 and the second direction D2.

As shown in FIG. 1B, the element section 10E may include the first row 20A and a second row 20B. A direction from the first row 20A to the second row 20B is along the first direction D1. The first row 20A includes the first receiving element 21 and a part of the plurality of second receiving elements 22. The part of the plurality of second receiving elements 22 is arranged along the third direction D3. The second row 20B includes another part of the plurality of second receiving elements 22. The other part of the plurality of second receiving elements 22 is arranged along the third direction D3.

As shown in FIG. 1A, the element section 10E includes a first row 10A. The first row 10A includes the first transmitting element 11 and the plurality of second transmitting elements 12. The plurality of second transmitting elements 12 are arranged along the third direction D3. The third direction D3 crosses a plane including the first direction D1 and the second direction D2.

As shown in FIG. 1A, the element section 10E may include the first row 10A and a second row 10B. A direction from the first row 10A to the second row 10B is along the first direction D1. The first row 10A includes the first transmitting element 11 and a part of the plurality of second transmitting elements 12. The part of the plurality of second transmitting elements 12 is arranged along the third direction D3. The second row 10B includes another part of the plurality of second transmitting elements 12. The other part of the plurality of second transmitting elements 12 is arranged along the third direction D3.

As shown in FIG. 1A, another first transmitting element 11A may be provided. A second transmitting element 12 (element 12A) corresponding to the other first transmitting element 11A exists. A distance (first distance L1) between the other first transmitting element 11A and the element 12A may satisfy the first formula. Noise is suppressed. Crosstalk is suppressed. High-accuracy inspection is possible.

As shown in FIG. 1B, another first receiving element 21 (element 21A) corresponding to the other first transmitting element 11A is provided. A second receiving element 22 (element 22A) corresponding to the other first receiving element 21 (element 21A) is provided. A distance (first distance L1) between the other first receiving element 21 (element 21A) and element 22A may satisfy the first formula. Noise is suppressed. Crosstalk is suppressed. High-accuracy inspection is possible.

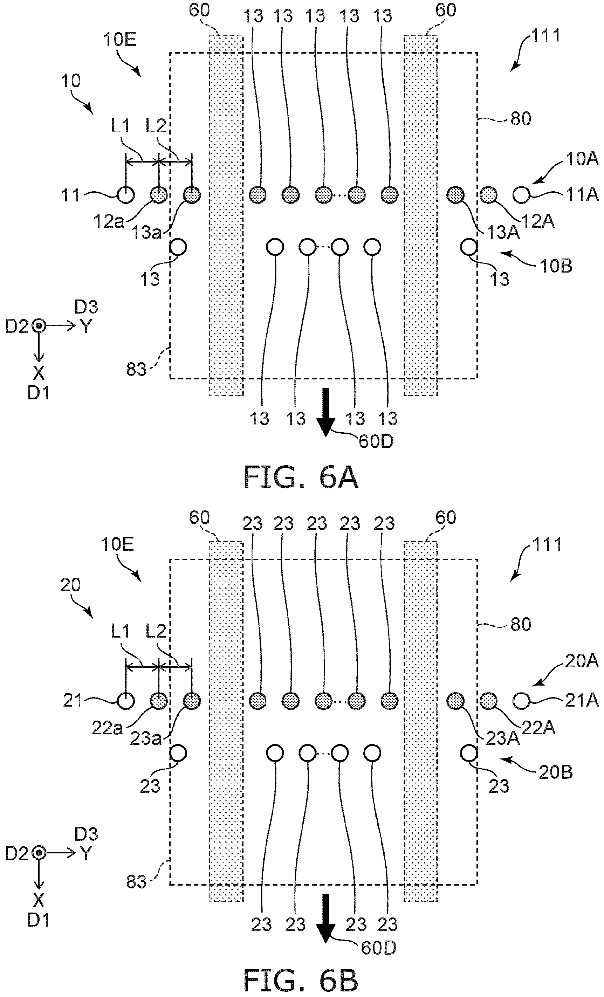

FIGS. 6A and 6B are schematic plan views illustrating an inspection device according to the first embodiment.

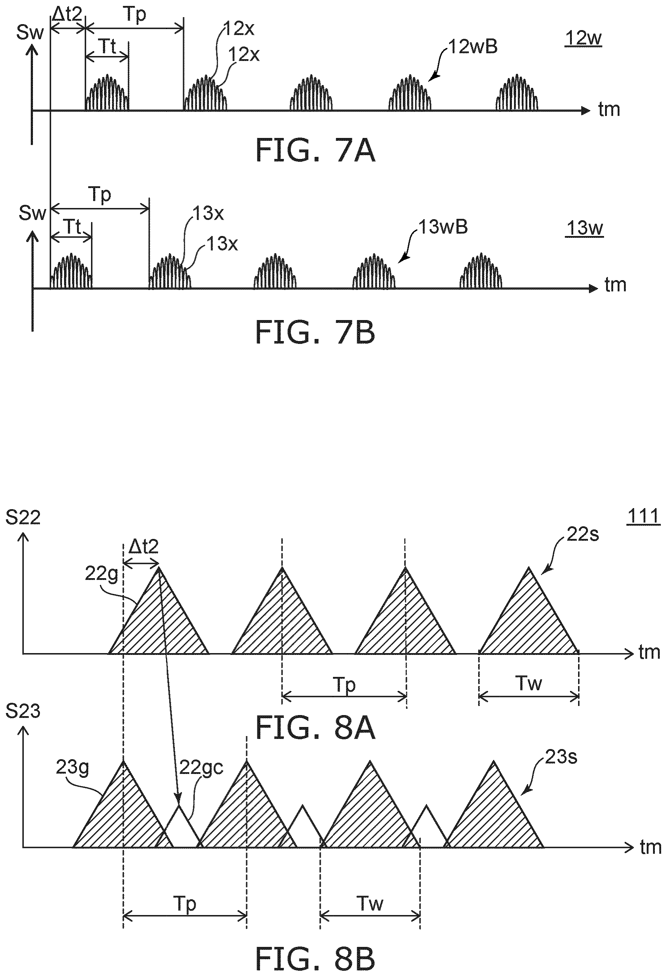

FIGS. 7A, 7B, 8A and 8B are schematic diagrams illustrating the inspection device according to the first embodiment.

As shown in FIGS. 6A and 6B, in an inspection device 111 according to the embodiment, the element section 10E includes a third transmitting element 13 and a third receiving element 23. Except for this, the configuration of the inspection device 111 may be the same as the configuration of the inspection device 110.

In the inspection device 111, the third transmitting element 13 (see FIG. 6A) is configured to transmit a third ultrasonic wave 13w (see FIGS. 2 and 7B). The third ultrasonic wave 13w enters the third receiving element 23 (see FIG. 6B).

In this example, a plurality of third transmitting elements 13 are provided. One of the plurality of third transmitting elements 13 (element 13a) is noticed. The element 13a is closest to the second transmitting element 12 (element 12a) among the plurality of third transmitting elements 13.

In this example, a plurality of third receiving elements 23 are provided. One of the plurality of third receiving elements 23 (element 23a) is noticed. The element 23a is closest to the second receiving element 22 (element 22a) among the plurality of third receiving elements 23.

FIG. 7A schematically illustrates the second ultrasonic wave 12w transmitted from the second transmitting element 12. FIG. 7B schematically illustrates the third ultrasonic wave 13w transmitted from the third transmitting element 13. The horizontal axis of these figures is time tm. The vertical axis is the intensity Sw of the ultrasonic wave.

As shown in FIG. 7A, in this example, the second ultrasonic wave 12w transmitted from the second transmitting element 12 includes a plurality of second burst waves 12wB. As shown in FIG. 7B, the third ultrasonic wave 13w transmitted from the third transmitting element 13 includes a plurality of third burst waves 13wB. The plurality of third burst waves 13wB have a first period Tp. One of the plurality of third burst waves 13wB has a time width Tt. One of the plurality of third burst waves 13wB includes a plurality of third waves 13x.

One of the plurality of second burst waves 12wB and one of the plurality of third burst waves 13wB have a second time difference $\Delta t2$. The second ultrasonic wave 12w enters the second receiving element 22 (element 22a). The third ultrasonic wave 13w enters the third receiving element 23 (element 23a).

As shown in FIG. 6B, a distance between the second receiving element 22 (element 22a) and the third receiving element 23 (element 23a) is defined as a second distance L2. As shown in FIG. 6A, a distance between the second transmitting element 12 (element 12a) and the third transmitting element 13 (element 13a) may be the second distance L2.

FIG. 8A schematically illustrates the second receive signal 22s output from the second receiving element 22. FIG. 8B schematically illustrates the third receive signal 23s output from the third receiving element 23. The horizontal axis of these figures is time tm. The vertical axis of FIG. 8A is the magnitude S22 (e.g., voltage) of the second receive signal 22s. The vertical axis of FIG. 8B is the magnitude S23 (e.g., voltage) of the third receive signal 23s.

As shown in FIG. 8A, the second receive signal 22s includes the plurality of second signals 22g. The plurality of second signals 22g correspond to the plurality of second burst waves 12wB, respectively. As shown in FIG. 8B, the third receive signal 23s includes a plurality of third signals 23g. The plurality of third signals 23g correspond to the plurality of third burst waves 13wB, respectively. For example, one of the plurality of third signals 23g corresponds to one of the plurality of third burst waves 13wB.

As shown in FIGS. 8A and 8B, one of the plurality of second signals 22g and one of the plurality of third signals 23g have the second time difference $\Delta t2$. The second time difference $\Delta t2$ in the receive signal reflects the second time difference $\Delta t2$ in the transmitted ultrasonic wave (see FIGS. 7A and 7B). The period of the plurality of second signals 22g and the period of the plurality of third signals 23g are the first period Tp.

As shown in FIG. 8A, one of the plurality of second signals 22g has the first time width Tw. As shown in FIG. 8, one of the plurality of third signals 23g has the first time width Tw. The first time width Tw in the receive signal may be the same as or different from the time width Tt in the transmitted ultrasonic wave.

In the inspection device 111, the second distance L2 (m), the second time difference Δt2 (s), the propagation velocity vx (m/s), the first period Tp (s), and the first time width Tw (s) satisfy following second formula:

$$m \text{ x } Tp + Tw/4 < \Delta t2 + L2/vx < (m + 1) \text{ x } Tp - Tw/4 \dots (2).$$

"m" is an integer greater than or equal to 0.

As shown in FIG. 8B, a signal 22gc is generated in the third receiving element 23 (element 23a). The signal 22gc corresponds, for example, to a part of the second ultrasound wave 12w. For example, when a part of the second ultrasonic wave 12w is incident on the element 23a, the signal 22gc is generated. When a component (signal 22gc) overlaps the plurality of third signals 23g in time, this component (signal 22gc) becomes noise. For example, crosstalk occurs.

In embodiments, the second formula is satisfied. Thereby, the temporal position of the unnecessary component (signal 22gc) is between the plurality of third signals 23g. Thereby, noise is suppressed. Crosstalk can be suppressed. It is possible to provide an inspection device capable of improving detection accuracy. "m" may be 0 or 1. High resolution is obtained. Miniaturization becomes easy.

As shown in FIG. 6B, another first receiving element (element 21A), another second receiving element (element 22A), and another third receiving element (element 23A) may be provided. The distance (second distance L2) between the other second receiving element (element 22A) and the other third receiving element (element 23A) may satisfy the second formula. Noise is suppressed. Crosstalk is suppressed. High-accuracy inspection is possible.

As shown in FIG. 6A, another first transmitting element 11A, another second transmitting element (element 12A), and another third transmitting element (element 13A) may be provided. The distance (second distance L2) between the other second transmitting element (element 12A) and the other third transmitting element (element 13A) may satisfy the second formula. Further, the distance (first distance L1) between the other first transmitting element 11A and the other second transmitting element (element 12A) may satisfy the first formula. Noise is suppressed. Crosstalk is suppressed. High-accuracy inspection is possible.

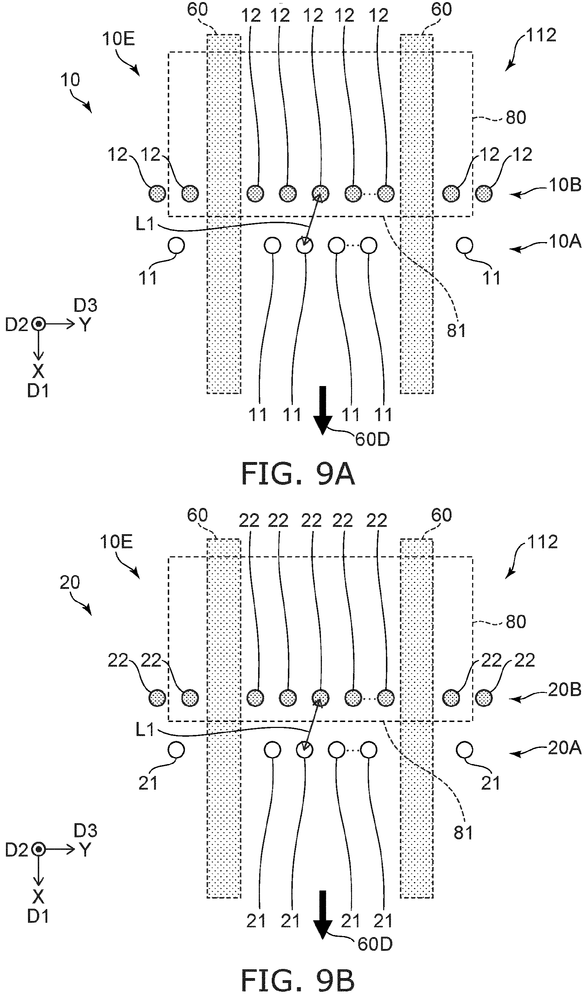

FIGS. 9A and 9B are schematic plan views illustrating an inspection device according to the first embodiment.

As shown in FIGS. 9A and 9B, in an inspection device 112 according to the embodiment, the direction from the first receiving element 21 to the second receiving element 22 corresponding to the first distance L1 crosses the third direction D3. The direction from the first transmitting element 11 to the second transmitting element 12, corresponding to the first distance L1, crosses the third direction D3. Except for this, the configuration of the inspection device 112 may be the same as the configuration the inspection device 110, for example.

In the inspection device 112, the position of the first receiving element 21 in the first direction D1 is different from the position of the second receiving element 22 in the first direction D1. The first distance L1 between the first receiving element 21 and the second receiving element 22 satisfies the first formula. Thereby, noise is suppressed. Crosstalk is suppressed. High detection accuracy is obtained.

In the inspection device 112, the position of the first transmitting element 11 in the first direction D1 is different from the position of the second transmitting element 12 in the first direction D1. Such a first distance L1 between the first transmitting element 11 and the second transmitting element 12 satisfies the first formula. Thereby, noise is suppressed. Crosstalk is suppressed. High detection accuracy is obtained.

In the inspection device 112, for example, noise caused by the end portion 81 of the inspection target 80 in the first direction D1 can be suppressed. For example, erroneous detection due to the influence of the end portion 81 can be suppressed.

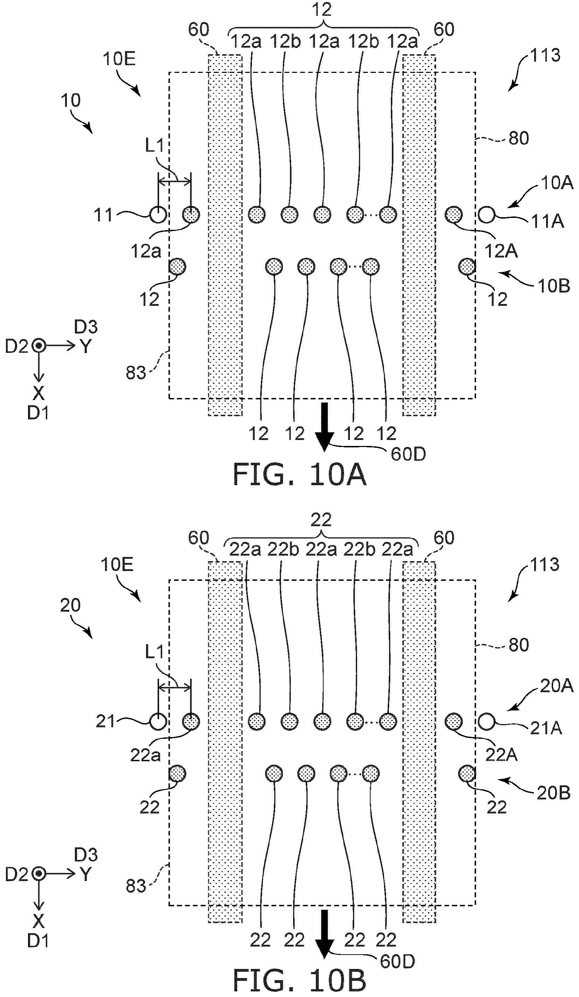

FIGS. 10A and 10B are schematic plan views illustrating an operation of an inspection device according to the first embodiment.

As shown in FIG. 10A, in an inspection device 113 according to the embodiment, the third direction from one of the plurality of second transmitting elements 12 (element 12a) to another one of the plurality of second transmitting elements 12 (element 12b) crosses a plane including the first direction D1 and the second direction D2. For example, the third direction D3 is substantially perpendicular to the first direction D1. The other one of the plurality of second transmitting elements 12 (element 12b) is next to the one of the plurality of second transmitting elements 12 (element 12a). For example, the element 12a and the element 12b are arranged alternately along the third direction D3.

As shown in FIG. 10B, in the inspection device 113, the third direction D3 from one of the plurality of second receiving elements 22 (element 22a) to another one of the plurality of second receiving elements 22 (element 22b) crosses a plane including the first direction D1 and the second direction D2. For example, the third direction D3 is substantially perpendicular to the first direction D1. The other one of the plurality of second receiving elements 22 (element 22b) is next

EP 4 679 081 A1

to the one of the plurality of second receiving elements 22 (element 22a). For example, the element 22a and element 22b are arranged alternately along the third direction D3.

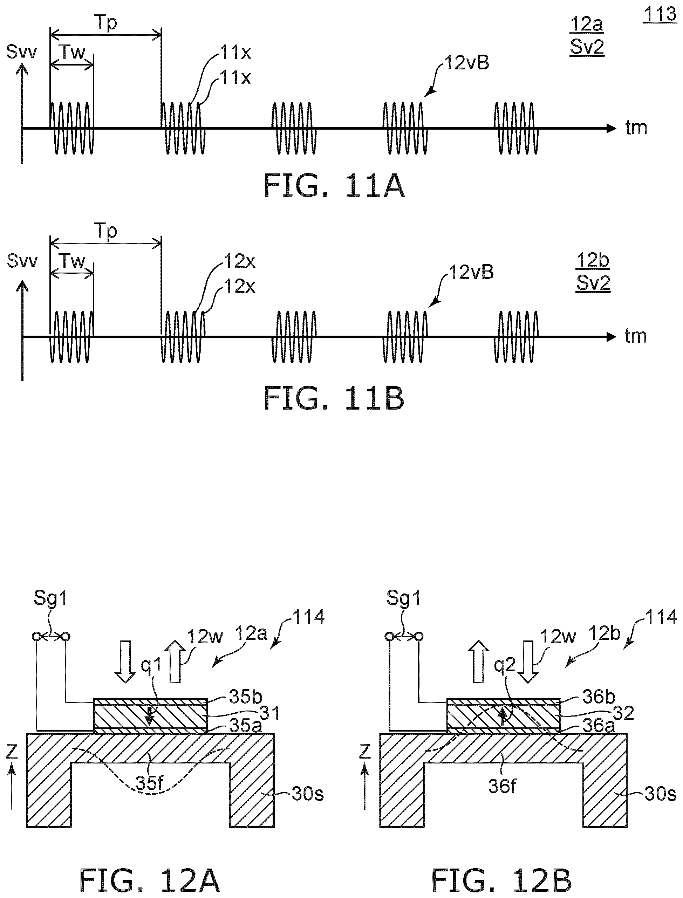

FIGS. 11A and 11B are schematic diagrams illustrating the operation of the inspection device according to the first embodiment.

FIG. 11A illustrates the second drive signal Sv2 supplied to one of the plurality of second transmitting elements 12 (element 12a). FIG. 11 B illustrates the second drive signal Sv2 supplied to another one of the plurality of second transmitting elements 12 (element 12b). The horizontal axis of these figures is time tm. As shown in FIGS. 11A and 11B, the phase of the second drive signal Sv2 supplied to one of the plurality of second transmitting elements 12 is shifted with respect to the phase of the other second drive signal Sv2 supplied to the other one of the plurality of second transmitting elements 12 (element 12b). For example, the phase of the second drive signal Sv2 supplied to the element 12a is shifted by 180 degrees from the phase of the second drive signal Sv2 supplied to the element 12b.

Due to such phase shift, in a case where at least a part of the plurality of second burst waves 12wB from the element 12a and at least a part of the plurality of second burst waves 12wB from the element 12b overlap at the position of the receiving element, these burst waves weaken. Thereby, crosstalk is more suppressed. Except for this, the configuration of the inspection device 113 may be the same as the configuration of the inspection device 110.

FIGS. 12A and 12B are schematic sectional views illustrating a part of an inspection device according to the first embodiment.

FIGS. 12A and 12B illustrate the second transmitting element 12 in an inspection device 114 according to the embodiment. FIG. 12A corresponds to one of a plurality of second transmitting elements 12 (element 12a). FIG. 12B corresponds to another one of the plurality of second transmitting elements 12 (element12b).

As described with reference to FIG. 10A, the third direction D3 from one of the plurality of second transmitting elements 12 (element 12a) to another one of the plurality of second transmitting elements 12 (element 12b) crosses a plane including the first direction D1 and the second direction D2. The other one of the plurality of second transmitting elements 12 (element 12b) is next to the one of the plurality of second transmitting elements 12 (element 12a).

As shown in FIG. 12A, the element 12a includes a first piezoelectric layer 31. As shown in FIG. 12B, the element 12b includes a second piezoelectric layer 32. In the inspection device 114, the polarity q1 of the first piezoelectric layer 31 is inverted with respect to the polarity q2 of the second piezoelectric layer 32. Thereby, even when the signal Sg1 supplied to the element 12a and the element 12b has the same phase, the phase of the ultrasonic wave (second ultrasonic wave 12w) transmitted from these transmitting elements can be shifted. Thereby, crosstalk can be suppressed.

Thus, in the inspection device 114, the polarity of the first piezoelectric layer 31 included in the one (element) of the plurality of second transmitting elements 12 is inverted with respect to the polarity of the other second piezoelectric layer 32 included in the other one of the plurality of second transmitting elements. The polarity is, for example, the direction of polarization. The direction of polarization can be controlled, for example, by high voltage application processing performed in the manufacturing process of the device. The polarity may be controlled by, for example, a material (e.g., crystal orientation).

As shown in FIG. 12A, the first piezoelectric layer 31 is provided between an electrode 35a and an electrode 35b. A stacked body including the first piezoelectric layer 31, the electrode 35a and the electrode 35b is fixed to a film portion 35f. The film portion 35f is supported by the base 30s. When the signal Sg1 (e.g., an AC signal) is applied to these electrodes, the first piezoelectric layer 31 is deformed. By the deformation, the film portion 35f is deformed. By the deformation, the second ultrasonic wave 12w is generated.

As shown in FIG. 12B, the second piezoelectric layer 32 is provided between an electrode 36a and an electrode 36b. A stacked body including the second piezoelectric layer 32, the electrode 36a and the electrode 36b is fixed to a film portion 36f. The film portion 36f is supported by the base 30s. When the signal Sg1 (e.g., an AC signal) is applied to these electrodes, the second piezoelectric layer 32 is deformed. By the deformation, the film portion 36f is deformed. By the deformation, the second ultrasonic wave 12w is generated.

Due to the difference in polarity in the piezoelectric layers, the phase of deformation of the film portion 36f is shifted by 180 degrees from the phase of deformation of the film portion 35f. Thereby, the phase of the second ultrasonic wave 12w transmitted from the element 12a shifts by 180 degrees with respect to the phase of the second ultrasonic wave 12w transmitted from the element 12b. These ultrasonic waves weaken each other. Crosstalk is suppressed. Except for this, the configuration of the inspection device 114 may be the same as the configuration of the inspection device 110.

Second Embodiment

In the following description of the second embodiment, the same parts as those of the first embodiment will be omitted as appropriate.

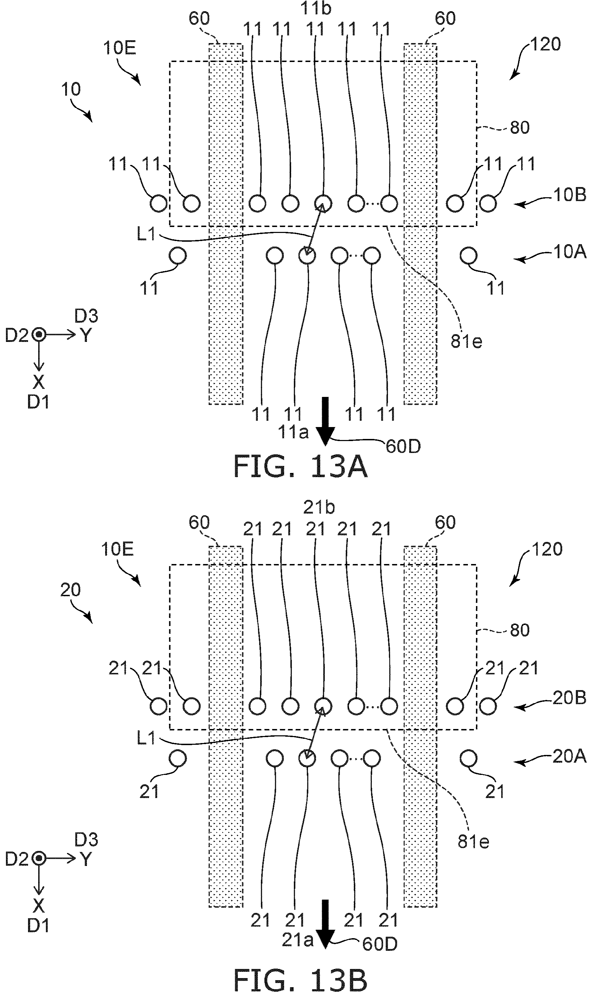

FIGS. 13A and 13B are schematic plan views illustrating an inspection device according to the second embodiment.

As shown in FIGS. 13A and 13B, an inspection device 120 according to the second embodiment includes the element section 10E and the transport section 60 (see FIG. 2).

As shown in FIG. 13A, the element section 10E includes the plurality of first transmitting elements 11. The plurality of first transmitting elements 11 are configured to transmit the first ultrasonic wave 11w (see, for example, FIG. 2). The first ultrasonic wave 11w includes the plurality of first burst waves 11wB (see, for example, FIGS. 4A and 4B). The plurality of first burst waves 11wB have the first period Tp.

As shown in FIG. 13B, the element section 10E includes the plurality of first receiving elements 21. The first ultrasonic wave 11w is incident on the plurality of first receiving elements 21 (see, for example, FIG. 2). The transport section 60 is configured to transport the inspection target 80 along the first direction D1 in the space 88S between the plurality of first transmitting elements 11 and the plurality of first receiving elements 21 (For example, see FIG. 2).

As shown in FIG. 13B, the distance between one of the plurality of first receiving elements 21 (element 21a) and another one of the plurality of first receiving elements 21 (element 21b) is defined as the first distance L1. For example, the other one of the plurality of first receiving elements 21 (element 21b) is next to the one of the plurality of first receiving elements 21 (element 21a) of the plurality of first receiving elements 21.

As shown in FIG. 13A, the distance between one of the plurality of first transmitting elements 11 (element 11a) and another one of the plurality of first transmitting elements 11 (element 11b) may be the first distance L1. For example, the other one of the plurality of first transmitting elements 11 (element 11b) is next to the one of the plurality of first transmitting elements 11 (element 11a) of the plurality of first transmitting elements 11.

As shown in FIG. 13B, one of the plurality of first receiving elements 21 (element 21a) faces one of the plurality of first transmitting elements 11 (element 11a) in the second direction D2 (see FIG. 2). The other one of the plurality of first receiving elements 21 (element 21b) faces the other one of the plurality of first transmitting elements 11 (element 11b) in the second direction D2 (see, for example, FIG. 2).

In the inspection device 120, the first distance L1 (m), the propagation velocity vx (m/s) of the first ultrasonic wave 11w in the space 88S, the first period Tp (s), and the first time width Tw (s) satisfy following third formula:

$$n \times Tp + Tw/4 < L1/vx < (n + 1) \times Tp - Tw/4 \ldots (3).$$

"$n$" is an integer greater than or equal to 0.

In the inspection device 120, for example, at the element 21b (receiving element), a component (Signal 21gc, see Figure 5 (b)) caused by a part of the first ultrasonic wave 11w transmitted from the element 11a (transmitting element) is positioned between the plurality of signals of the first ultrasonic wave 11w transmitted from the element 11b (transmitting element) in time. Thereby, noise is suppressed. Crosstalk is suppressed.

In this example, the position of the other one of the plurality of first transmitting elements 11 (element 11b) in the first direction D1 is different from the position of the one of the plurality of first transmitting elements 11 (element 11a) in the first direction D1. For example, the influence of a part of the first ultrasonic wave 11w caused by the end portion 81 in the first direction D1 of the inspection target 80 can be suppressed.

In this example, the position of the other one of the plurality of first receiving elements 21 (element 21b) in the first direction D1 is different from the position of the one of the plurality of first receiving elements 21 (element 21a) in the first direction D1. For example, the influence of a part of the component (signal 21gc) of the first ultrasonic wave 11w caused by the end portion 81 in the first direction D1 of the inspection target 80 can be suppressed.

In the state illustrated in FIGS. 13A and 13B, a position in the first direction D1 of the end portion 81 at the front side (end portion 81e) in the transport direction 60D (first direction D1) of the inspection target 80 exists between a position in the transport direction 60D of the element 11a and a position in the transport direction 60D of the element 11b. The element 11b overlaps the inspection target 80 in the second direction D2. The element 11a does not overlap the inspection target 80 in the second direction D2. In this state, in the first ultrasonic wave 11w transmitted from the element 11b, a component (signal 21gc) is generated by the influence of the end portion 81.

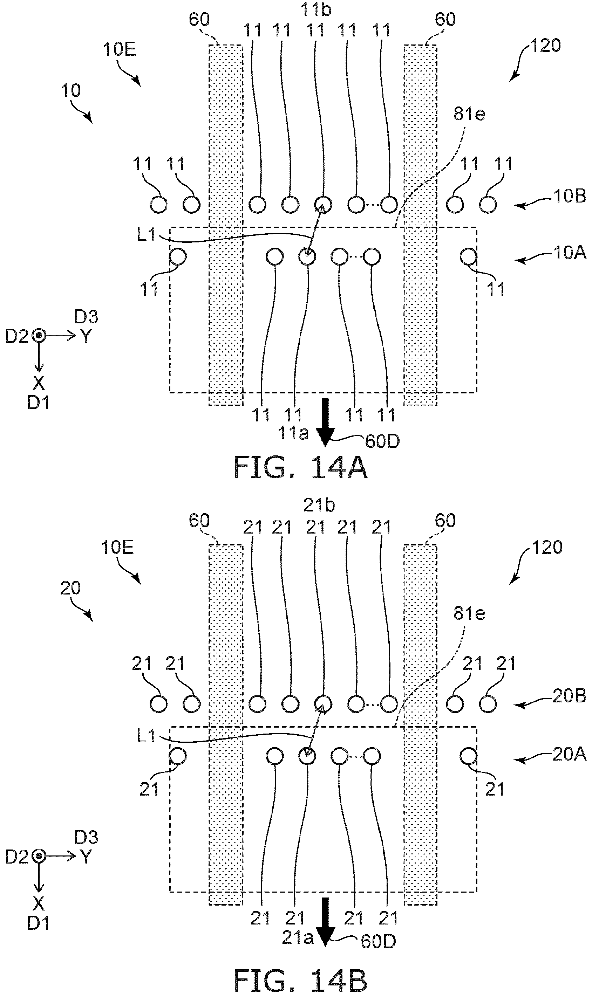

FIGS. 14A and 14B are schematic plan views illustrating the inspection device according to the second embodiment.

FIGS. 14A and 14 (b) illustrate another state in the inspection device 120. In the state illustrated in FIGS. 14A and 14B, a position in the first direction D1 of the end portion 81 at the rear side (end portion 81e) of the inspection target 80 in the transport direction 60D (the first direction D1) exists between a position in the transport direction 60D of the element 11a and a position in the transport direction 60D of the element 11b. The element 11a overlaps the inspection target 80 in the second direction D2. The element 11b does not overlap the inspection target 80 in the second direction D2. In this state, in the first ultrasonic wave 11w transmitted from the element 11a, a component (signal 21gc) is generated by the influence of the end portion 81.

In the inspection device 120, for example, at the element 21a (receiving element), a component (Signal 21gc, see Figure 5 (b)) caused by a part of the first ultrasonic wave 11w transmitted from the element 11b (transmitting element) is positioned between the plurality of signals of the first ultrasonic wave 11w transmitted from the element 11a (transmitting element) in time. Thereby, noise is suppressed. Crosstalk is suppressed.

By satisfying the conditions of the third equation, noise can be suppressed in both the state illustrated in FIGS. 13A and 13 and the state illustrated in FIGS. 14A and 14B.

In the inspection device 120, "*n*" may be 0 or 1. High resolution is obtained. Miniaturization becomes easy.

As shown in FIGS. 13A and 13B, the second direction D2 from the plurality of first transmitting elements 11 to the plurality of first receiving elements 21 crosses the first direction D1 (see FIG.2, for example).

As shown in FIGS. 13A and 13B, the element section 10E includes the first row 10A and the second row 10B. The direction from the first row 10A to the second row 10B is along the first direction D1. The first row 10A includes a part of the plurality of first transmitting elements 11. The part of the plurality of first transmitting elements 11 is arranged along the third direction D3. The third direction D3 crosses a plane including the first direction D1 and the second direction D2. The third direction D3 is, for example, the Y-axis direction.

The second row 10B includes another part of the plurality of first transmitting elements 11. The other part of the plurality of first transmitting elements 11 is arranged along the third direction D3. The one of the plurality of first transmitting elements 11 (element 11a) is included in the first row 10A. The other one of the plurality of first transmitting elements 11 (element 11b) is included in the second row 10B.

Third Embodiment

The third embodiment relates to an inspection method.

The inspection method according to the embodiment may be a method that employs the configuration described with respect to the first embodiment or the second embodiment.

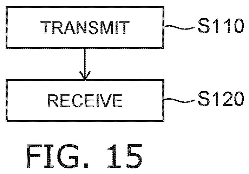

FIG. 15 is a flowchart illustrating an inspection method according to the third embodiment.

As shown in FIG. 15, in the inspection method, ultrasonic waves are transmitted (step S110). In the inspection method, ultrasonic waves are received to inspect the inspection target 80 (step S120).

For example, the configuration described with respect to the first embodiment may be applied. For example, in step S110, the first transmitting element 11 of the element section 10E is caused to transmit the first ultrasonic wave 11w, and the second transmitting element 12 of the element section 10E is caused to transmit the second ultrasonic wave 12w. The first ultrasonic wave 11w includes the plurality of first burst waves 11wB having the first period Tp. The second ultrasonic wave 12w includes the plurality of second burst waves 12wB having the first period Tp. The element section 10E includes the first transmitting element 11, the second transmitting element 12, the first receiving element 21 and the second receiving element 22.

In step S110, the inspection target 80 is transported along the first direction D1 in the space 88S between the first transmitting element 11 and the first receiving element 21 and between the second transmitting element 12 and the second receiving element 22 (see Figure 2).

In step S120, the inspection target 80 is inspected based on signals obtained from the first receiving element 21 on which the first ultrasonic wave 11w is incident and the second receiving element 22 on which the second ultrasonic wave 12w is incident.

The first receiving element 21 is configured to output the first receive signal 21s corresponding to the first ultrasonic wave 11w. The second receiving element 22 is configured to output the second receive signal 22s corresponding to the second ultrasonic wave 12w.

The first receive signal 21s includes the plurality of first signals 21g respectively corresponding to the plurality of first burst waves 11wB. One of the plurality of first signals 21g has the first time width Tw. The second receive signal 22s includes the plurality of second signals 22g respectively corresponding to the plurality of second burst waves 12wB. One of the plurality of second signals 22g has the first time width Tw. One of the plurality of first signals 21g and one of the plurality of second signals 22g have the first time difference $\Delta$t1 (see FIGS. 5A and 5B).

The first distance L1 (m) between the first receiving element 21 and the second receiving element 22, the first time difference $\Delta$t1 (s), the propagation velocity vx (m/s) of the first ultrasonic wave 11w and the second ultrasonic wave 12w in the space 88S, the first period Tp (s), and the first time width Tw (s) satisfy the following first formula:

$$n \times Tp + Tw/4 < \Delta t1 + L1/vx < (n + 1) \times Tp - Tw/4 \dots (1).$$

"*n*" is an integer of 0 or more. Noise can be suppressed. "*n*" may be 0 or 1. For example, at least one of the first time difference $\Delta$t1, the first period Tp, or the first time width Tw may be controlled so that the first formula is satisfied.

The configuration described with respect to the second embodiment may be applied to the third embodiment. For example, the element section 10E includes the plurality of first transmitting elements 11 and the plurality of first receiving elements 21. In step S110, the plurality of first transmitting elements 11 are caused to transmit the first ultrasonic wave 11w including the plurality of first burst waves 11wB having the first period Tp. The inspection target 80 is transported along the first direction D1 in the space 88S between the plurality of first transmitting elements 11 and the plurality of first receiving elements 21.

In step S120, the inspection target 80 is inspected based on the signals obtained from the plurality of first receiving elements 21 to which the first ultrasonic waves 11w are incident.

Each of the plurality of first receiving elements 21 is configured to output the first receive signal 21s corresponding to the first ultrasonic wave 11w. The first receive signal 21s includes the plurality of first signals 21g respectively corresponding to the plurality of first burst waves 11wB. One of the plurality of first signals 21g has the first time width Tw. The distance between one of the plurality of first receiving elements 21 (element 21a) and another one of the plurality of first receiving elements 21 (element 22b) is defined as the first distance L1.

For example, the distance between one of the plurality of first transmitting elements 11 (element 11a) and another one of the plurality of first transmitting elements 11 (element 11b) may be the first distance L1.

The first distance L1 (m), the propagation velocity vx (m/s) of the first ultrasonic wave 11w in the space 88S, the first period Tp (s), and the first time width Tw (s) satisfy the following third formula:

$$n \times Tp + Tw/4 < L1/vx < (n + 1) \times Tp - Tw/4 \ldots (3).$$

The other one of the plurality of first receiving elements 21 (element 21b) is next to the one of the plurality of first receiving elements 21 (element 21a) among the plurality of first receiving elements 21. The other one of the plurality of first transmitting elements 11 (element 11b) is next to the one of the plurality of first transmitting elements 11 (element 11a) among the plurality of first transmitting elements 11. "n" is an integer of 0 or more. Noise can be suppressed. "$n$" can be 0 or 1. For example, at least one of the first period Tp(s) or the first time width Tw(s) may be controlled so that the third formula is satisfied.

In this inspection method, the position of the other one of the plurality of first receiving elements 21 (element 21b) in the first direction D1 may be different from the position of the one of the plurality of first receiving elements 21 (element 21a) in the first direction D1. In this inspection method, the position of the other one of the plurality of first transmitting elements 11 (element 11b) in the first direction D1 may be different from the position of the one of the plurality of first transmitting elements 11 (element 11a) in the first direction D1.

According to the embodiment, it is possible to provide an inspection method capable of improving detection accuracy.

The embodiments may include the following configurations (technical proposals).

Configuration 1

An inspection device, comprising:

an element section including

a first transmitting element configured to transmit a first ultrasonic wave, the first ultrasonic wave including a plurality of first burst waves having a first period Tp,
a second transmitting element configured to transmit a second ultrasonic wave, the second ultrasonic wave including a plurality of second burst waves having the first period Tp,
a first receiving element, the first ultrasonic wave being incident on the first receiving element, and
a second receiving element, the second ultrasonic wave being incident on the second receiving element; and

a transport section configured to transport an inspection target along a first direction in a space between the first transmitting element and the first receiving element and between the second transmitting element and the second receiving element,
a second direction from the first transmitting element to the first receiving element crossing the first direction,
the first receiving element being configured to output a first receive signal corresponding to the first ultrasonic wave,
the second receiving element being configured to output a second receive signal corresponding to the second ultrasonic wave,
the first receive signal including a plurality of first signals respectively corresponding to the plurality of first burst waves, one of the plurality of first signals having a first time width Tw,
the second receive signal including a plurality of second signals respectively corresponding to the plurality of second burst waves, one of the plurality of second signals having the first time width Tw,
a first distance L1 (m) between the first receiving element and the second receiving element, a first time difference Δt1 (s) between one of the plurality of first signals and one of the plurality of second signals, a propagation velocity vx (m/s) of the first ultrasonic wave and the second ultrasonic wave in the space, the first period Tp (s), and the first time width Tw (s) satisfying

$$n \times Tp + Tw/4 < \Delta t1 + L1/vx < (n + 1) \times Tp - Tw/4,$$

and
the *n* being an integer of 0 or more.

Configuration 2

The inspection device according to Configuration 1, wherein
the *n is* 0 or 1.

Configuration 3

The inspection device according to Configuration 1 or 2, wherein
the first distance L1 is a length along an inter-element direction between a center of the first receiving element in the inter-element direction from the first receiving element to the second receiving element and a center of the second receiving element in the inter-element direction.

Configuration 4

The inspection device according to Configuration 1 or 2, wherein
a third direction from the first transmitting element to the second transmitting element crosses a plane including the first direction and the second direction.

Configuration 5

The inspection device according to any one of Configurations 1-3, wherein
a position of the first transmitting element in the first direction is different from a position of the second transmitting element in the first direction.

Configuration 6

The inspection device according to Configuration 1 or 2, wherein

the element section includes a plurality of the second transmitting elements and a plurality of the second receiving elements,
one of the plurality of second receiving elements is closest to the first receiving element among the plurality of second receiving elements,
the first distance L1 is a distance between the first receiving element and the one of the plurality of second receiving elements, and
the second ultrasonic wave transmitted from one of the plurality of second transmitting elements enters the one of the plurality of second receiving elements.

Configuration 7

The inspection device according to Configuration 6, wherein

the element section includes a first row,
the first row includes the first transmitting element and the plurality of second transmitting elements, and
the plurality of second transmitting elements are arranged along a third direction crossing a plane including the first direction and the second direction.

Configuration 8

The inspection device according to Configuration 6, wherein

the element section includes a first row and a second row,
a direction from the first row to the second row is along the first direction,
the first row includes the first transmitting element and a part of the plurality of second transmitting elements,
the part of the plurality of second transmitting elements are arranged along a third direction crossing a plane including the first direction and the second direction,
the second row includes another part of the plurality of second transmit elements, and
the other part of the plurality of second transmitting elements are arranged along the third direction.

Configuration 9

The inspection device according to Configuration 6, wherein

the element section includes a first row and a second row,
a direction from the first row to the second row is along the first direction,
the first row includes the first receiving element and a part of the plurality of second receiving elements,
the part of the plurality of second receiving elements are arranged along a third direction crossing a plane containing the first direction and the second direction,
the second row includes another part of the plurality of second receiving elements, and
the other part of the plurality of second receiving elements are arranged along the third direction.

Configuration 10

The inspection device according to any one of Configuration 1-9, wherein

the element section further includes

a third transmitting element configured to transmit a third ultrasonic wave, the third ultrasonic wave including a plurality of third burst waves having the first period Tp, and
a third receiving element, the third ultrasonic wave being incident on third receiving element,

the third receiving element is configured to output a third receive signal corresponding to the third ultrasonic wave,
the third receive signal includes a plurality of third signals respectively corresponding to the plurality of third burst waves, one of the plurality of third signals having the first time width Tw,
a second distance L2 (m) between the second receiving element and the third receiving element, a second time difference $\Delta t2$ (s) between one of the plurality of second signals and one of the plurality of third signals, the propagation velocity vx (m/s), the first period Tp (s), and the first time width Tw (s) satisfy

$$m \times Tp + Tw/4 < \Delta t2 + L2/vx < (m + 1) \times Tp - Tw/4,$$

and
the $m$ is an integer of 0 or more.

Configuration 11

An inspection device, comprising:

an element section including

a plurality of first transmitting element configured to transmit a first ultrasonic wave, the first ultrasonic wave including a plurality of first burst waves having a first period Tp, and
a plurality of first receiving element, the first ultrasonic wave being incident on the plurality of first receiving element; and

a transport section configured to transport an inspection target along a first direction in a space between the plurality of first transmitting elements and the plurality of first receiving elements,
each of the plurality of first receiving elements being configured to output a first receive signal corresponding to the first ultrasonic wave,

the first receive signal including a plurality of first signals respectively corresponding to the plurality of first burst waves, one of the plurality of first signals having a first time width Tw,

a first distance L1 (m) between one of the plurality of first transmitting elements and another one of the plurality of first transmitting elements, a propagation velocity of the first ultrasonic wave in the space vx (m/s), the first period Tp (s), and the first time width Tw (s) satisfying

$$n \times Tp + Tw/4 < L1/vx < (n + 1) \times Tp\text{-}Tw/4,$$

the other one of the plurality of first transmitting elements being next to the one of the plurality of first transmitting elements among the plurality of first transmitting elements, and

the $n$ being an integer of 0 or more.

Configuration 12

The inspection device according to Configuration 11, wherein

a position of the other one of the plurality of first transmitting elements in the first direction is different from a position of the one of the plurality of first transmitting elements in the first direction.

Configuration 13

The inspection device according to Configuration 11, wherein

a second direction from the plurality of first transmitting elements to the plurality of first receiving elements crosses the first direction,

the element part includes a first row and a second row,

a direction from the first row to the second row is along the first direction,

the first row includes a part of the plurality of first transmitting elements,

the part of the plurality of first transmitting elements are arranged along a third direction crossing a plane including the first direction and the second direction,

the second row includes another part of the plurality of first transmitting elements,

the other part of the plurality of first transmitting elements are arranged along the third direction,

the one of the plurality of first transmitting elements is included in the first row, and

the other one of the plurality of first transmitting elements is included in the second column.

Configuration 14

The inspection device according to Configuration 1, wherein

a third direction from one of the plurality of second transmitting elements to another one of the plurality of second transmitting elements crosses a plane including the first direction and the second direction,

the other one of the plurality of second transmitting elements is next to the one of the plurality of second transmitting elements, and

a phase of a second drive signal supplied to the one of the plurality of second transmitting elements is shifted with respect to a phase of another second drive signal supplied to the other one of the plurality of second transmission elements.

Configuration 15

The inspection device according to Configuration 1, wherein

a third direction from one of the plurality of second transmitting elements to another one of the plurality of second transmitting elements crosses a plane including the first direction and the second direction,

the other one of the plurality of second transmitting elements is next to the one of the plurality of second transmitting elements, and

a polarity of a first piezoelectric layer included in the one of the plurality of second transmission elements is inverted with respect to a polarity of another second piezoelectric layer included in the other one of the plurality of second transmission elements.

Configuration 16

An inspection method, comprising:

causing a first transmitting element to transmit a first ultrasonic wave including a plurality of first burst waves having a first period Tp, and causing a second transmitting element to transmit a second ultrasonic wave including a plurality of second burst waves having the first period Tp, and transporting an inspection target along a first direction in a space between the first transmitting element and a first receiving element and between the second transmitting element and a second receiving element, an element section including the first transmitting element, the second transmitting element, the first receiving element and the second receiving element;

inspecting the inspection target based on a signal obtained from the first receiving element and the second receiving element, the first ultrasonic wave being incident on the first receiving element, the second ultrasonic wave being incident on the second receiving element,

the first receiving element being configured to output a first receive signal corresponding to the first ultrasonic wave, the second receiving element being configured to output a second receive signal corresponding to the second ultrasonic wave,

the first receive signal including a plurality of first signals respectively corresponding to the plurality of first burst waves, one of the plurality of first signals having a first time width Tw,

the second receive signal including a plurality of second signals respectively corresponding to the plurality of second burst waves, one of the plurality of second signals having the first time width Tw,

a first distance L1 (m) between the first receiving element and the second receiving element, a first time difference $\Delta t1$ (s) between one of the plurality of first signals and one of the plurality of second signals, a propagation velocity vx (m/s) of the first ultrasonic wave and the second ultrasonic wave in the space, the first period Tp (s), and the first time width Tw (s) satisfying

$$n \times Tp + Tw/4 < \Delta t1 + L1/vx < (n + 1) \times Tp - Tw/4,$$

and
the $n$ being an integer of 0 or more.

Configuration 17

The inspection method according to Configuration 16, wherein the $n$ is 0 or 1.

Configuration 18

An inspection method, comprising:

causing a plurality of first transmitting element to transmit a first ultrasonic wave including a plurality of first burst waves having a first period Tp, and transporting an inspection target along a first direction in a space between the plurality of first transmitting elements and a plurality of first receiving elements, an element section including the plurality of first transmitting elements and the plurality of first receiving elements; and

inspecting the inspection target based on a signal obtained from the plurality of first receiving elements, the first ultrasonic waves being incident on the plurality of first receiving elements,

each of the plurality of first receiving elements being configured to output a first receive signal corresponding to the first ultrasonic wave,

the first receive signal including a plurality of first signals respectively corresponding to the plurality of first burst waves, one of the plurality of first signals having a first time width Tw,

a first distance L1 (m) between one of the plurality of first receiving elements and another one of the plurality of first receiving elements, a propagation velocity of the first ultrasonic wave in the space vx (m/s), the first period Tp (s), and the first time width Tw (s) satisfying

$$n \times Tp + Tw/4 < L1/vx < (n + 1) \times Tp - Tw/4,$$

the other one of the plurality of first transmitting elements being next to the one of the plurality of first transmitting elements among the plurality of first transmitting elements, and

the *n is* an integer of 0 or more.

Configuration 19

The inspection method according to Configuration 18, wherein
a position of the other one of the plurality of first transmission elements in the first direction is different from a position of the one of the plurality of first transmission elements in the first direction.

Configuration 20

The inspection method according to Configuration 18 or 19, wherein
the *n is* 0 or 1.

According to the embodiments, it is possible to provide an inspection device and an inspection method capable of improving detection accuracy.

Hereinabove, exemplary embodiments of the invention are described with reference to specific examples. However, the embodiments of the invention are not limited to these specific examples. For example, one skilled in the art may similarly practice the invention by appropriately selecting specific configurations of components included in inspection devices such as transmitting elements, receiving elements, transport section, controllers, etc., from known art. Such practice is included in the scope of the invention to the extent that similar effects thereto are obtained.

Further, any two or more components of the specific examples may be combined within the extent of technical feasibility and are included in the scope of the invention to the extent that the purport of the invention is included.

Moreover, all inspection devices and inspection methods practicable by an appropriate design modification by one skilled in the art based on the inspection devices and inspection methods described above as embodiments of the invention also are within the scope of the invention to the extent that the purport of the invention is included.

Various other variations and modifications can be conceived by those skilled in the art within the spirit of the invention, and it is understood that such variations and modifications are also encompassed within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

[Reference Numeral List]

    10: transmitting section
    10A, 10B: first and second rows
    10D: transmitting circuit
    10E: element section
    11 to 13: first to third transmitting elements
    11A to 13A: first to third transmitting elements
    11a, 11b, 12a, 12b, 13a: element
    11vB, 12vB: first and second burst signals
    11w to 13w: first to third ultrasonic waves
    11wB to 13wB: first to third burst waves
    11x to 13x: first to third waves
    15: transmitting waveguide
    20: receiving section
    20A, 20B: first and second rows
    20D: detection circuit
    21 to 23: first to third receiving elements
    21A, 22A, 23A, 21a, 21b, 22A, 22a, 23A, 23a: element
    21g to 23g: first to third signals
    21gc, 22gc: signal
    21s to 23s: first to third receive signals

25: receiving waveguide
30s: base
31, 32: first and second piezoelectric layers
35a, 35b, 36a, 36b: electrode
35f, 36f: film portion
60: transport section
60D: transport direction
61, 62: first and second transport mechanisms
70: controller
80: inspection target
81, 83: end portion
88S: space
110 to 114, 120: inspection device
D1 to D3: first to third directions
L1, L2: first and second distances
S1: detection result
S21, S22, S23: magnitude
Sc: control signal
Sd: detection signal
Sg1: signal
Sv1, Sv2: first and second drive signals
Svv: voltage
Sw: intensity
Tp: first period
Tt, Tv: time width
Tw: first time width
q1, q2: polarity
$\Delta t1$, $\Delta t2$: second time difference

## Claims

1. An inspection device, comprising:

an element section including

a first transmitting element configured to transmit a first ultrasonic wave, the first ultrasonic wave including a plurality of first burst waves having a first period Tp,
a second transmitting element configured to transmit a second ultrasonic wave, the second ultrasonic wave including a plurality of second burst waves having the first period Tp,
a first receiving element, the first ultrasonic wave being incident on the first receiving element, and
a second receiving element, the second ultrasonic wave being incident on the second receiving element; and

a transport section configured to transport an inspection target along a first direction in a space between the first transmitting element and the first receiving element and between the second transmitting element and the second receiving element,
a second direction from the first transmitting element to the first receiving element crossing the first direction,
the first receiving element being configured to output a first receive signal corresponding to the first ultrasonic wave,
the second receiving element being configured to output a second receive signal corresponding to the second ultrasonic wave,
the first receive signal including a plurality of first signals respectively corresponding to the plurality of first burst waves, one of the plurality of first signals having a first time width Tw,
the second receive signal including a plurality of second signals respectively corresponding to the plurality of second burst waves, one of the plurality of second signals having the first time width Tw,
a first distance L1 (m) between the first receiving element and the second receiving element, a first time difference $\Delta t1$ (s) between one of the plurality of first signals and one of the plurality of second signals, a propagation velocity vx (m/s) of the first ultrasonic wave and the second ultrasonic wave in the space, the first period Tp (s), and the first time width Tw (s) satisfying

$$n \times Tp + Tw/4 < \Delta t1 + L1/vx < (n + 1) \times Tp - Tw/4,$$

and
the $n$ being an integer of 0 or more.

2. The device according to claim 1, wherein
the $n$ is 0 or 1.

3. The device according to claim 1, wherein
the first distance L1 is a length along an inter-element direction between a center of the first receiving element in the inter-element direction from the first receiving element to the second receiving element and a center of the second receiving element in the inter-element direction.

4. The device according to claim 1, wherein
a third direction from the first transmitting element to the second transmitting element crosses a plane including the first direction and the second direction.

5. The device according to claim 1, wherein
a position of the first transmitting element in the first direction is different from a position of the second transmitting element in the first direction.

6. The device according to claim 1, wherein

the element section includes a plurality of the second transmitting elements and a plurality of the second receiving elements,
one of the plurality of second receiving elements is closest to the first receiving element among the plurality of second receiving elements,
the first distance L1 is a distance between the first receiving element and the one of the plurality of second receiving elements, and
the second ultrasonic wave transmitted from one of the plurality of second transmitting elements enters the one of the plurality of second receiving elements.

7. The device according to claim 6, wherein

the element section includes a first row,
the first row includes the first transmitting element and the plurality of second transmitting elements, and
the plurality of second transmitting elements are arranged along a third direction crossing a plane including the first direction and the second direction.

8. The device according to claim 6, wherein

the element section includes a first row and a second row,
a direction from the first row to the second row is along the first direction,
the first row includes the first transmitting element and a part of the plurality of second transmitting elements,
the part of the plurality of second transmitting elements are arranged along a third direction crossing a plane including the first direction and the second direction,
the second row includes another part of the plurality of second transmit elements, and
the other part of the plurality of second transmitting elements are arranged along the third direction.

9. The device according to claim 6, wherein

the element section includes a first row and a second row,
a direction from the first row to the second row is along the first direction,
the first row includes the first receiving element and a part of the plurality of second receiving elements,
the part of the plurality of second receiving elements are arranged along a third direction crossing a plane containing the first direction and the second direction,
the second row includes another part of the plurality of second receiving elements, and
the other part of the plurality of second receiving elements are arranged along the third direction.

10. The device according to claim 1, wherein

the element section further includes

a third transmitting element configured to transmit a third ultrasonic wave, the third ultrasonic wave including a plurality of third burst waves having the first period Tp, and
a third receiving element, the third ultrasonic wave being incident on third receiving element,

the third receiving element is configured to output a third receive signal corresponding to the third ultrasonic wave,
the third receive signal includes a plurality of third signals respectively corresponding to the plurality of third burst waves, one of the plurality of third signals having the first time width Tw,
a second distance L2 (m) between the second receiving element and the third receiving element, a second time difference $\Delta t2$ (s) between one of the plurality of second signals and one of the plurality of third signals, the propagation velocity vx (m/s), the first period Tp (s), and the first time width Tw (s) satisfy

$$m \times Tp + Tw/4 < \Delta t2 + L2/vx < (m + 1) \times Tp - Tw/4,$$

and
the $m$ is an integer of 0 or more.

11. An inspection device, comprising:

an element section including

a plurality of first transmitting element configured to transmit a first ultrasonic wave, the first ultrasonic wave including a plurality of first burst waves having a first period Tp, and
a plurality of first receiving element, the first ultrasonic wave being incident on the plurality of first receiving element; and

a transport section configured to transport an inspection target along a first direction in a space between the plurality of first transmitting elements and the plurality of first receiving elements,
each of the plurality of first receiving elements being configured to output a first receive signal corresponding to the first ultrasonic wave,
the first receive signal including a plurality of first signals respectively corresponding to the plurality of first burst waves,
one of the plurality of first signals having a first time width Tw,
a first distance L1 (m) between one of the plurality of first transmitting elements and another one of the plurality of first transmitting elements, a propagation velocity of the first ultrasonic wave in the space vx (m/s), the first period Tp (s), and the first time width Tw (s) satisfying

$$n \times Tp + Tw/4 < L1/vx < (n + 1) \times Tp-Tw/4,$$

the other one of the plurality of first transmitting elements being next to the one of the plurality of first transmitting elements among the plurality of first transmitting elements, and
the $n$ being an integer of 0 or more.

12. The device according to claim 11, wherein
a position of the other one of the plurality of first transmitting elements in the first direction is different from a position of the one of the plurality of first transmitting elements in the first direction.

13. The device according to claim 11, wherein

a second direction from the plurality of first transmitting elements to the plurality of first receiving elements crosses the first direction,

the element part includes a first row and a second row,

a direction from the first row to the second row is along the first direction,

the first row includes a part of the plurality of first transmitting elements,

the part of the plurality of first transmitting elements are arranged along a third direction crossing a plane including the first direction and the second direction,

the second row includes another part of the plurality of first transmitting elements,

the other part of the plurality of first transmitting elements are arranged along the third direction,

the one of the plurality of first transmitting elements is included in the first row, and

the other one of the plurality of first transmitting elements is included in the second column.

14. The device according to claim 1, wherein

a third direction from one of the plurality of second transmitting elements to another one of the plurality of second transmitting elements crosses a plane including the first direction and the second direction,

the other one of the plurality of second transmitting elements is next to the one of the plurality of second transmitting elements, and

a phase of a second drive signal supplied to the one of the plurality of second transmitting elements is shifted with respect to a phase of another second drive signal supplied to the other one of the plurality of second transmission elements.

15. The device according to claim 1, wherein

a third direction from one of the plurality of second transmitting elements to another one of the plurality of second transmitting elements crosses a plane including the first direction and the second direction,

the other one of the plurality of second transmitting elements is next to the one of the plurality of second transmitting elements, and

a polarity of a first piezoelectric layer included in the one of the plurality of second transmission elements is inverted with respect to a polarity of another second piezoelectric layer included in the other one of the plurality of second transmission elements.

16. An inspection method, comprising:

causing a first transmitting element to transmit a first ultrasonic wave including a plurality of first burst waves having a first period Tp, and causing a second transmitting element to transmit a second ultrasonic wave including a plurality of second burst waves having the first period Tp, and transporting an inspection target along a first direction in a space between the first transmitting element and a first receiving element and between the second transmitting element and a second receiving element, an element section including the first transmitting element, the second transmitting element, the first receiving element and the second receiving element;

inspecting the inspection target based on a signal obtained from the first receiving element and the second receiving element, the first ultrasonic wave being incident on the first receiving element, the second ultrasonic wave being incident on the second receiving element,

the first receiving element being configured to output a first receive signal corresponding to the first ultrasonic wave,

the second receiving element being configured to output a second receive signal corresponding to the second ultrasonic wave,

the first receive signal including a plurality of first signals respectively corresponding to the plurality of first burst waves, one of the plurality of first signals having a first time width Tw,

the second receive signal including a plurality of second signals respectively corresponding to the plurality of second burst waves, one of the plurality of second signals having the first time width Tw,

a first distance L1 (m) between the first receiving element and the second receiving element, a first time difference $\Delta t1$ (s) between one of the plurality of first signals and one of the plurality of second signals, a propagation velocity vx (m/s) of the first ultrasonic wave and the second ultrasonic wave in the space, the first period Tp (s), and the first time width Tw (s) satisfying

$$n \times Tp + Tw/4 < \Delta t1 + L1/vx < (n + 1) \times Tp - Tw/4,$$

and
the *n* being an integer of 0 or more.

17. The method according to claim 16, wherein
the *n* is 0 or 1.

18. An inspection method, comprising:

causing a plurality of first transmitting element to transmit a first ultrasonic wave including a plurality of first burst waves having a first period Tp, and transporting an inspection target along a first direction in a space between the plurality of first transmitting elements and a plurality of first receiving elements, an element section including the plurality of first transmitting elements and the plurality of first receiving elements; and
inspecting the inspection target based on a signal obtained from the plurality of first receiving elements, the first ultrasonic waves being incident on the plurality of first receiving elements,
each of the plurality of first receiving elements being configured to output a first receive signal corresponding to the first ultrasonic wave,
the first receive signal including a plurality of first signals respectively corresponding to the plurality of first burst waves,
one of the plurality of first signals having a first time width Tw,
a first distance L1 (m) between one of the plurality of first receiving elements and another one of the plurality of first receiving elements, a propagation velocity of the first ultrasonic wave in the space vx (m/s), the first period Tp (s), and the first time width Tw (s) satisfying

$$n \times Tp + Tw/4 < L1/vx < (n + 1) \times Tp\text{-}Tw/4,$$

the other one of the plurality of first transmitting elements being next to the one of the plurality of first transmitting elements among the plurality of first transmitting elements, and
the *n* is an integer of 0 or more.

19. The method according to claim 18, wherein
a position of the other one of the plurality of first transmission elements in the first direction is different from a position of the one of the plurality of first transmission elements in the first direction.

20. The method according to claim 18, wherein
the *n* is 0 or 1.

FIG. 1A

FIG. 1B

FIG. 2

FIG. 3A

FIG. 3B

FIG. 4A

FIG. 4B

FIG. 5A

FIG. 5B

FIG. 6A

FIG. 6B

FIG. 7A

FIG. 7B

FIG. 8A

FIG. 8B

FIG. 9A

FIG. 9B

FIG. 10A

FIG. 10B

FIG. 11A

FIG. 11B

FIG. 12A          FIG. 12B

FIG. 13A

FIG. 13B

FIG. 14A

FIG. 14B

```
┌─────────────────────┐
│      TRANSMIT       │──── S110
└─────────────────────┘
           │
           ▼
┌─────────────────────┐
│      RECEIVE        │──── S120
└─────────────────────┘
```

FIG. 15

## INTERNATIONAL SEARCH REPORT

| International application No. |
|---|
| **PCT/JP2023/028236** |

**A. CLASSIFICATION OF SUBJECT MATTER**

*G01N 29/32*(2006.01)i; *G01N 29/04*(2006.01)i; *G01N 29/27*(2006.01)i
FI:  G01N29/32; G01N29/04; G01N29/27

According to International Patent Classification (IPC) or to both national classification and IPC

**B. FIELDS SEARCHED**

Minimum documentation searched (classification system followed by classification symbols)

G01N29/00-G01N29/52; A61B8/00-A61B8/15; G01B17/00-G01B17/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | US 2014/0180092 A1 (BUTTERFLY NETWORK, INC.) 26 June 2014 (2014-06-26) entire text, all drawings | 1-20 |
| A | JP 9-243611 A (SUMITOMO METAL INDUSTRIES, LTD.) 19 September 1997 (1997-09-19) entire text, all drawings | 1-20 |
| A | JP 2019-163939 A (SEIKO EPSON CORPORATION) 26 September 2019 (2019-09-26) entire text, all drawings | 1-20 |
| A | US 2005/0033181 A1 (SIEMENS MEDICAL SOLUTIONS USA, INC.) 10 February 2005 (2005-02-10) entire text, all drawings | 1-20 |
| A | US 2020/0249203 A1 (DARKVISION TECHNOLOGIES INC.) 06 August 2020 (2020-08-06) entire text, all drawings | 1-20 |

☐ Further documents are listed in the continuation of Box C.　☑ See patent family annex.

| | |
|---|---|
| *　Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 September 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

### INTERNATIONAL SEARCH REPORT
**Information on patent family members**

International application No.

**PCT/JP2023/028236**

| Patent document cited in search report | | | Publication date (day/month/year) | Patent family member(s) | | | Publication date (day/month/year) |
|---|---|---|---|---|---|---|---|
| US | 2014/0180092 | A1 | 26 June 2014 | US | 2013/0116561 | A1 | |
| | | | | entire text, all drawings | | | |
| | | | | WO | 2013/059358 | A2 | |
| | | | | EP | 3689250 | A1 | |
| | | | | CA | 2851839 | A1 | |
| | | | | AU | 2012326218 | B2 | |
| JP | 9-243611 | A | 19 September 1997 | (Family: none) | | | |
| JP | 2019-163939 | A | 26 September 2019 | US | 2019/0283466 | A1 | |
| | | | | entire text, all drawings | | | |
| | | | | CN | 110285777 | A | |
| US | 2005/0033181 | A1 | 10 February 2005 | (Family: none) | | | |
| US | 2020/0249203 | A1 | 06 August 2020 | GB | 2581181 | A | |
| | | | | entire text, all drawings | | | |
| | | | | NO | 20200145 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022042612 A